# EUROPEAN PATENT APPLICATION

(11) **EP 2 685 170 A1**
(43) Date of publication of application: **15.01.2014**
(21) Application number: 12175713.2
(22) Date of filing: 10.07.2012
(51) Int. Cl.: F23R 3/00

(54) **Cooled wall structure for the hot gas parts of a gas turbine and method for manufacturing such a structure**

(71) Applicant: Alstom Technology Ltd, 5400 Baden (CH)
(72) Inventor: Ojeda, Alejandro, 5415 Nussbaumen (CH); Reinert, Felix, 5430 Wettingen (CH); Maurer, Michael, 79713 Bad Säckingen (DE); Hoebel, Matthias, 5210 Windisch (CH); Lauffer, Diane, 5430 Wettingen (CH)

(57) **Abstract**

The invention relates to a cooled wall structure for the hot gas parts of a gas turbine, especially for a combustion chamber, comprising a sandwich panel (23) with a base plate (19), which is exposed with a hot side (18) to hot gas of the gas turbine and is covered on a side opposite to the hot side by a covering layer (20), whereby a cooling channel (21) for guiding a cooling fluid, especially cooling air, extends parallel to the base plate (19) between the base plate (19) and the covering layer (20).

An enhanced heat transfer coefficient is achieved without causing a substantial increase in pressure drop by providing micro-structures (22a,b) for enhancing heat transfer between a cooling fluid passing the cooling channel (21) and the base plate (19) in the cooling channel (21), and having the micro-structures (22a,b) made by an additive manufacturing process.

## Description

### BACKGROUND OF THE INVENTION

The present invention relates to the technology of gas turbines. It refers to cooled wall structure for the hot gas parts of a gas turbine according to the preamble of claim 1.

It further refers to methods for manufacturing such a cooled wall structure.

### PRIOR ART

In order to achieve higher efficiencies in stationary gas turbines and higher overall output power, the industry is striving for always-higher firing temperatures.

For a long time, the continuous optimization of high-temperature capable superalloys has enabled the increase of the firing temperature. In recent years, however, the material properties have become insufficient to withstand the harsh environment in the hot gas path of gas turbines (high temperature, high load, creep, and oxidation) without efficient cooling.

Sophisticated cooling methods and special coatings are now used to ensure the reliable operation of gas turbines components over a very long lifetime.

At the same time, it is important to reduce emissions like CO2 and NOx. This can be achieved by improving the combustion process and by thus increasing the thermodynamic efficiency of the gas turbine.

Among several measures, the reduction of cooling air is one option for this optimization. Current cooling designs use effusion cooling holes, which release cooling air through the sidewalls (liners) into the combustion chamber (see for example document EP 1 983 265 A2). The effusion cooling air does not take part in the combustion process and is therefore detrimental for emissions. To counteract this issue, convectively cooled designs are used for example on the cold side of liners to eliminate effusion-cooling schemes and with it the undesired cooling air injection into the combustion chamber.

However, the need to improve efficiency and emissions even further is more important than ever to fulfil the market requirements and legislative policies. This can be achieved by introducing more advanced cooling variants with higher convective cooling efficiency (higher heat transfer coefficient) and less downstream leakage air.

These improved cooling variants include, for example, small structures for enhanced heat transfer on the cold side of the combustor liners. Small features like ribs and arrows are placed all over the surface, increasing the total surface and acting as vortex generators.

Moreover, so called near wall cooling systems are embodied into hot gas path component walls. A near wall cooling system consists of several cooling channels inside the wall, making the convective cooling more efficient by keeping the air longer in the wall to be cooled.

Such a system is for example used for the so-called AcoustiCool combination of acoustical (Helmholtz) damping and near wall cooling in the SEV front panel (see document EP 2 295 864 A1). In this embodiment, several layers of sheet superalloys are joined together in a high temperature brazing process, forming the cooling channels.

In contrast to the above-mentioned features like ribs and arrows used up until now, smaller scaled structures (so called micro-structures) can further improve the cooling efficiency while keeping the created pressure drop at an acceptable level. They can be applied - like their larger size counter parts - on the cold (outer) walls of combustor components.

Furthermore, microstructures located on the cold side of hot gas part walls can enhance the heat transfer coefficient when combined with impingement cooling (see document US 5,353,865 A).

While conventional sized heat transfer enhancement structures and micro-structures are placed onto the (outside) cold side of hot gas components, a better variant consists of placing micro-structures inside near wall cooling systems, for example for AcoustiCool front panels. With these features inside the cooling channels, the heat transfer coefficient can be enhanced while keeping the pressure drop increase at an acceptable level (see Meis M. et al., "Heat transfer enhancement in micro-channels caused by vortex promoters", International Journal of Heat and Mass Transfer 53, pp.29-40 (2010)).

This is mainly achieved by generating controlled turbulences inside the cooling channels. The turbulence enables the transport of cold air from the centre section of the cooling channel to the hot boundary layer, enhancing the mixture. As an example, one can think of manufacturing microstructures for the generation of vortices with a rotating axis parallel to the cooling airflow inside the cooling channels.

### SUMMARY OF THE INVENTION

It is an object of the present invention to provide a cooling wall structure that has the advantage improved heat transfer with reduced pressure losses.

These and other objects are obtained by cooled wall structure according to claim 1 and a method for manufacturing such a cooled wall structure according to claim 11 or 16.

The cooled wall structure according to the invention comprises a sandwich panel with a base plate, which is exposed with a hot side to hot gas of the gas turbine and is covered on a side opposite to the hot side by a covering layer, whereby a cooling channel for guiding a cooling fluid, especially cooling air, extends parallel to the base plate between the base plate and the covering layer.

It is characterized in that micro-structures for enhancing heat transfer between a cooling fluid passing the cooling channel and the base plate are provided in the cooling channel, and that the micro-structures are made by an additive manufacturing process.

According to an embodiment of the invention the micro-structures are made by a Micro Laser Metal Forming (µ-LMF) process.

According to another embodiment of the invention the cooling channel is bordered by the base plate and the covering layer, and the micro-structures are formed on the surfaces of the base plate and/or the covering layer.

According to a further embodiment of the invention at least some of the micro-structures have a simple geometrical form.

Specifically, at least some of the micro-structures have the form of a vertically standing cylindrical pin.

According to another embodiment of the invention at least some of the micro-structures have a vortex generating form.

Specifically, at least some of the micro-structures have the form of a pyramid.

According to just another embodiment of the invention the sandwich panel consists of the base plate and the covering layer, and the cooling channel is formed by a recess in the base plate.

According to a further embodiment of the invention the sandwich panel consists of the base plate, the covering layer and at least one intermediate layer arranged between the base plate and the covering layer, and the cooling channel is formed by an opening in the intermediate layer.

According to another embodiment of the invention the base plate and the covering layer each have a channel bordering surface bordering the cooling channel, and that the micro-structures are placed on at least one of the bordering surfaces.

A first method according to the invention comprises the steps of:
a) providing a base plate having a channel bordering surface;
b) forming on the channel bordering surface at least one micro-structure by means of an additive manufacturing process for enhancing heat transfer between a cooling fluid flowing over the channel bordering surface and the channel bordering surface by means of an additive manufacturing process; and
c) combining the base plate with a covering layer, thereby creating a sandwich panel with an internal cooling channel, which is partially bordered by the channel bordering surface of the base plate.

According to an embodiment of the first inventive method the base plate has a recess, which forms the cooling channel, and the channel bordering surface is the bottom of the recess.

Specifically, the covering layer is directly bonded to the base plate.

According to another embodiment of the first inventive method an intermediate layer is provided with an opening for forming the cooling channel, and the base plate, the intermediate layer and the covering layer are combined, especially by bonding, thereby creating a sandwich panel with an internal cooling channel, which is partially bordered by the channel bordering surface of the base plate.

According to a further embodiment of the first inventive method a Micro Laser Metal Forming (µ-LMF) process is used as the additive manufacturing process.

A second method according to the invention comprises the steps of:
d) providing a base plate and a covering layer, the covering layer having a channel bordering surface;
e) forming on the channel bordering surface at least one micro-structure by means of an additive manufacturing process for enhancing heat transfer between a cooling fluid flowing over the channel bordering surface and the channel bordering surface by means of an additive manufacturing process; and
f) combining the base plate with a covering layer, thereby creating a sandwich panel with an internal cooling channel, which is partially bordered by the channel bordering surface of the covering layer.

According to an embodiment of the second inventive method the base plate has a recess, which forms the cooling channel, and the covering layer closes the cooling channel with its channel bordering surface.

Specifically, the covering layer is directly bonded to the base plate.

According to another embodiment of the second inventive method an intermediate layer is provided with an opening for forming the cooling channel, and the base plate, the intermediate layer and the covering layer are combined, especially by bonding, thereby creating a sandwich panel with an internal cooling channel, which is partially bordered by the channel bordering surface of the covering layer.

According to a further embodiment of the second inventive method a Micro Laser Metal Forming (µ-LMF) process is used as the additive manufacturing process.

### BRIEF DESCRIPTION OF THE DRAWINGS

The present invention is now to be explained more closely by means of different embodiments and with reference to the attached drawings.
- Fig. 1: a simplified scheme of a combustor arrangement of a gas turbine with sequential combustion, which can be advantageously equipped with a cooled wall structure according to the invention;
- Fig. 2: in a perspective view a cooled wall structure in form of a sandwich panel according to an embodiment of the invention;
- Fig. 3-5: in a view in flow direction the cross-sections of different embodiments of a cooled wall structure in form of a sandwich panel according to the invention;
- Fig. 6: in a view perpendicular to the flow direction the effect of the micro-structures in the cooling channel of a panel according to an embodiment of the invention;
- Fig. 7: various manufacturing steps for manufacturing a panel according to Fig. 3; and
- Fig. 8: a photograph of a base plate with a channel recess and a micro-structure in the form of an oblique rib within the recess made by a Laser Metal Forming process.

### DETAILED DESCRIPTION OF DIFFERENT EMBODIMENTS OF THE INVENTION

This invention provides a concept of creating micro-structures inside cooling channels and also a solution for a manufacturing method of these micro-structures.

The preferred manufacturing method for such small structures with dimensions in the order of millimetres is the use of an additive manufacturing process, especially µ-LMF (Micro Laser Metal Forming).

It is well-known (see document EP 2 295 864 A1) that near wall cooling systems can be produced by joining plates with prefabricated grooves with a high temperature brazing process (AcoustiCool front panel of a reheat or sequential combustion system).

Now, in order to manufacture micro-structures inside near wall cooling channels the µ-LMF is performed prior to joining of the plates by high temperature brazing. This combination enables the manufacturing of such filigree micro-structures inside cooling channels that otherwise would be inaccessible.

Turbulence generating features in the form of vortex generators or the like can also be formed inside combustor liner cooling channels. If previous engine experience has identified strong cooling needs at a particular location of the liner, the structures for enhanced heat transfer can be applied selectively only at that area, leading to a desirable more homogeneous temperature distribution.

A particular advantage of the µ-LMF approach of the present invention is its capability to modify existing designs. This opens possibilities for retrofit and improving the cooling air distribution of components, which have been already in service.

As only filigree features have to be formed in the cooling channels, a well-focused high-brilliance laser beam (e.g. a high power Yb:YAG fibre laser with a wavelength of 1070-1080 nm and laser spot sizes of some 100 µm) will be used. As a consequence, the heat input into the part is very small and distortion of the part during the µ-LMF operation is negligible.

It should be noted that the proposed µ-LMF manufacturing method offers high flexibility for the choice of the turbulence generator material. The (powder) material of the micro-features does not need to be of the same type as the component. Instead, it can be tailored to the functional needs, e.g. good weldability and compatibility with the base material, good heat conductivity, oxidation resistance, powder price, etc.

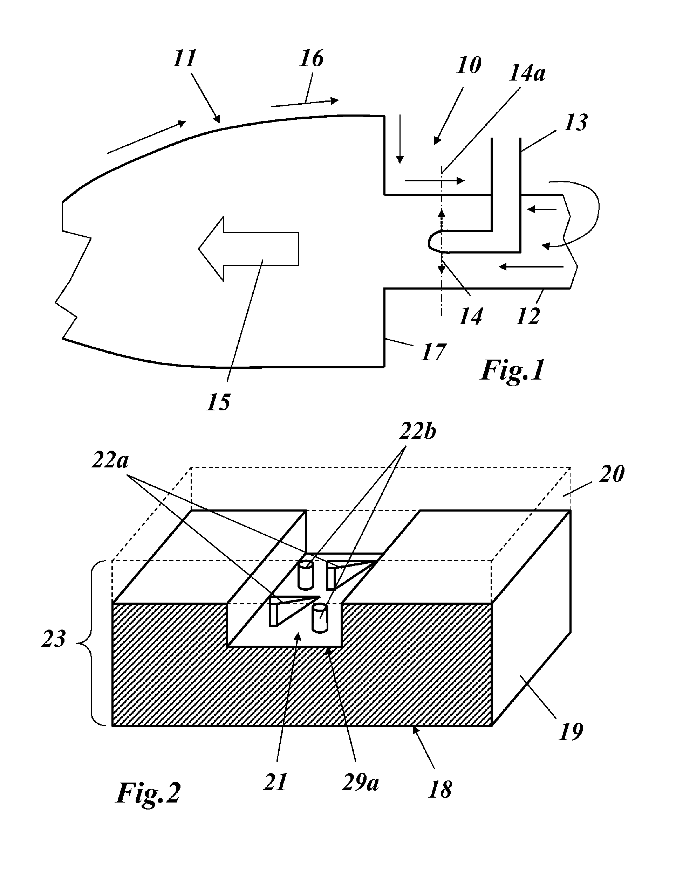

A typical combustor arrangement with a reheat combustion chamber of a gas turbine is sketched in Fig. 1 (see for example document WO 2011/061059 A2). The combustor arrangement 10 of Fig. 1 comprises a hot gas channel 12 coming from a first gas turbine stage and opening into the combustion chamber is 11, which is bordered by a wall 17. A fuel injection device 13 (burner) is positioned to inject a fuel 14 into a stream of hot gas flowing through the hot gas channel 12. The reheated hot gas 15 is used to drive the gas turbine by means of subsequent turbine stages (not shown).

Arrows outside of the combustion chamber 11 indicate a possible flow of cooling air along the liner segments, mixing section and burner. The fuel 14 is injected at the indicated injection plane 14a (see also EP 2 199 674 A1) and it is preferred to have no leakage air downstream of this plane.

In order to reduce the amount of cooling air dumped into the hot gas path downstream of the injection plane 14a, a near wall cooling system (cooled wall system) with additional internal micro-structures is proposed in this invention disclosure.

Fig. 2 shows in a perspective view a panel 23 for such a cooled wall system with near wall cooling. The panel 23 comprises a sandwich of a base plate 19 with an open cooling channel 21 in form of a recess, and a covering layer 20 (dashed lines) on top of the base plate 19, which covering layer 20 closes the cooling channel 21. The base plate 19 and the covering layer 20 are preferably joined by a brazing process.

Within the cooling channel 21 of Fig. 2 a plurality of exemplary micro-structures 22a, 22b is arranged on the lower channel bordering surface 29a, which is the bottom of the cooling channel recess. Two types of micro-structures are shown by example, one type (22b) having a simple geometrical form of a vertically standing cylindrical pin, while the other type (22a) has the vortex generating form of an oblique pyramid. These micro-structures 22a,b create a turbulent flow within the cooling channel 21, thereby enhancing the heat transfer between the base plate 19, which is exposed to the hot gas of the gas turbine with its hot side 18, and the cooling fluid (air) flowing through the cooling channel 21.

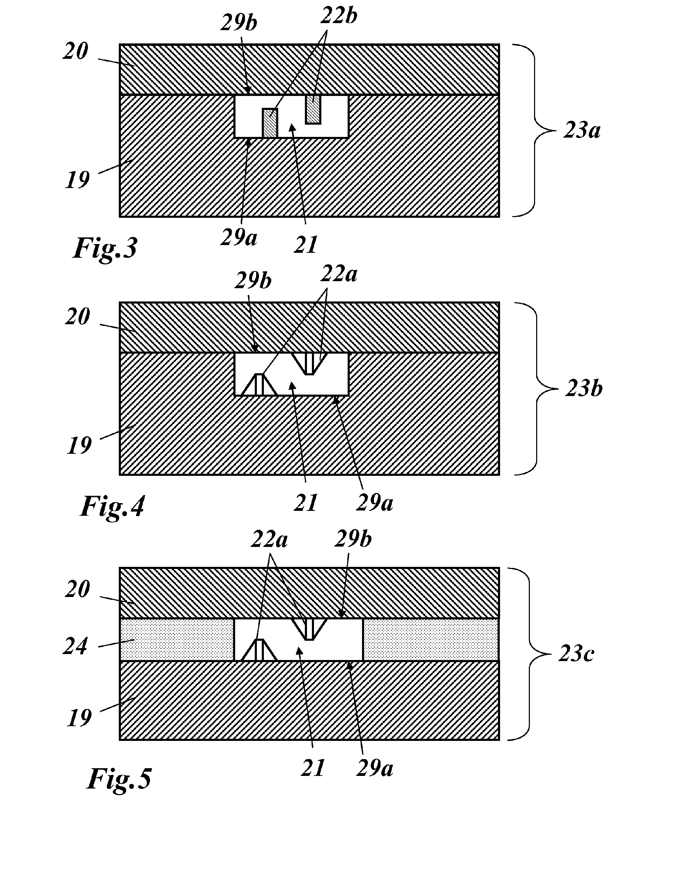

The cross section of a closed cooling channel according to different embodiments of the invention can be seen in Fig. 3, Fig. 4 and Fig. 5. The sandwich panel 23a of Fig. 3 has a near wall cooling channel 21 with simple micro-structures 22b in form of cylindrical pins. Different to the example of Fig. 2, the micro-structures are not only placed on the channel bordering surface 29a of the base plate 19, but also on the opposite channel bordering surface 29b of the covering layer 20.

The sandwich panel 23b of Fig. 4 is similar to the sandwich panel 23a of Fig. 3, but its cooling channel 21 is equipped with advanced micro-structures 22a in the form of oblique pyramids for finest vortex generation.

The sandwich panel 23c of Fig. 5 shows a different sandwich structure. Base plate 19 has, in this case, no recess. The cooling channel 21 is created by providing an intermediate layer 24 with a respective opening, which is arranged between the base plate 19 and the covering layer 20 to make up a three-layer sandwich structure. The micro-structures 22a again are placed on the channel bordering surfaces 29a and 29b of the base plate 19 and the covering layer 20, respectively.

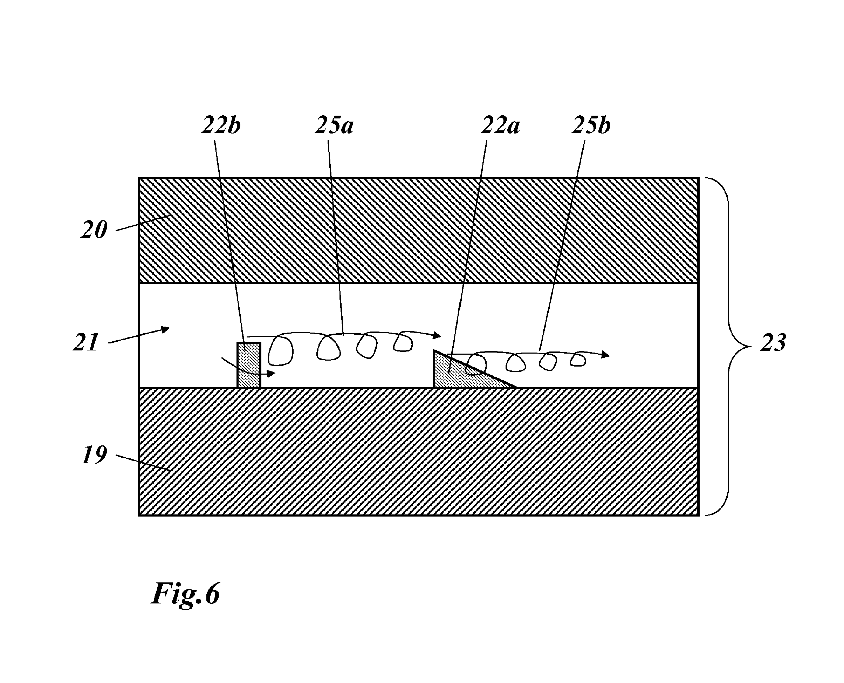

The general aim of the micro-structures 22a,b is to produce turbulences for enhanced mixing of cold air in the middle section of the cooling air with hot air on the boundary layers (see Fig. 6 showing the vortex flow structures 25a and 25b).

As shown in Fig. 6, one example would be to produce turbulences (25a,b), which have the rotation axis parallel to the cooling airflow inside the cooling channel 21. This is desired in order to achieve a low increase in pressure drop while increasing the heat transfer coefficient considerably.

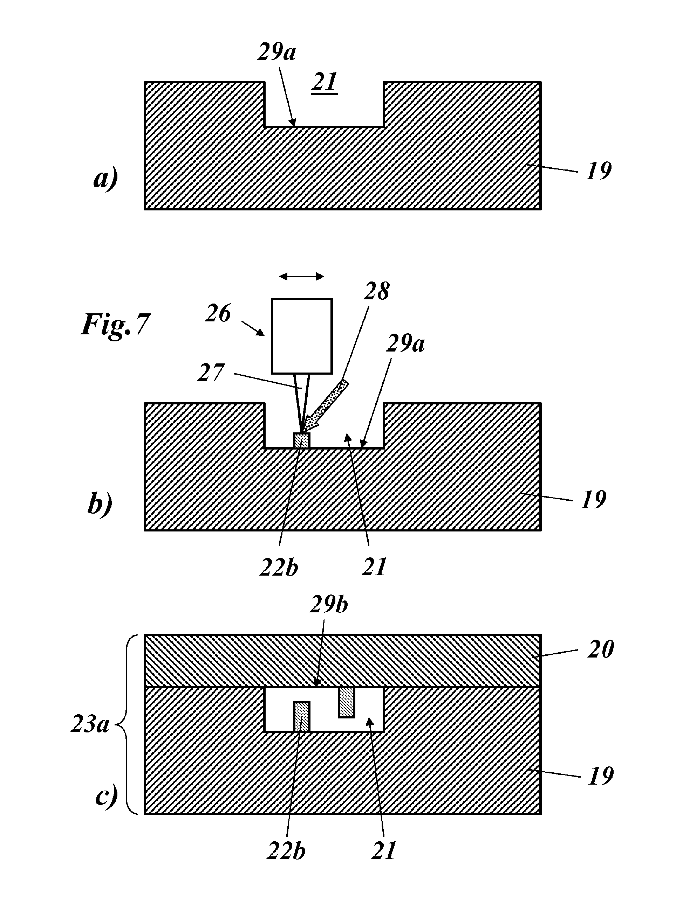

To manufacture a panel 23a according to Fig. 3, the basic manufacturing steps shown in Fig. 7 may be used. In a first step (Fig. 7a), a base plate 19 with a recess is provided, the bottom of which is the channel bordering surface 29a of the later cooling channel 21. The recess may have a width and a depth of some millimetres.

In a second step (Fig. 7b), micro-structures 22b are generated on the channel bordering surface 29a or bottom of the recess by means of a µ-LMF process with an automatic, robot-like, computer-controlled LMF device 26, whereby a focussed laser beam 27 melts a supplied powder material in an additive manufacturing process.

In a third step (Fig. 7c), the cooling channel 21 is closed and the panel 23a finished by brazing a covering layer 20 onto the base plate 19. The covering layer 20 may have its own micro-structures on its respective channel bordering surface 29b, which may have been applied by a separate µ-LMF process step before. In general, the micro-structures can be provided at one or both of the channel bordering surfaces 29a,b.

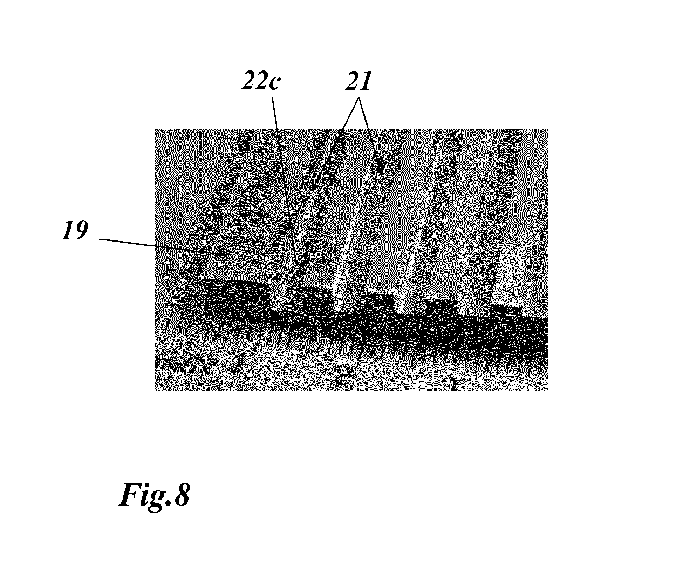

Finally, Fig. 8 shows a photograph of an exemplary base plate 19 with a plurality of parallel recesses/cooling channels 21, at least one of which is provided with a micro-structure 22c in form of an oblique rib, which has been manufactured by a µ-LMF process according to an embodiment of the invention.

In summary, the advantages of the invention are:
● Enhanced heat transfer coefficient (HTC) in near wall cooling channels;
● If shape is correctly designed, the HTC enhancement can be made with limited increase of pressure drop;
● Hot spots in near wall cooled components can be custom tailored by more effective use of cooling air;
● Reduction of cooling air consumption.

Especially, this HTC enhancement inside cooling channels can be used in further improvements of AcoustiCool SEV front panels, as shown in document EP 2 295 864 A1.

### LIST OF REFERENCE NUMERALS

- 10: combustor arrangement
- 11: combustion chamber
- 12: hot gas channel
- 13: fuel injection device (burner)
- 14: fuel
- 14a: injection plane
- 15: hot gas
- 16: cooling air flow
- 17: wall (combustion chamber)
- 18: hot side
- 19: base plate
- 20: covering layer
- 21: cooling channel
- 22a,b,c: micro-structure
- 23: panel
- 23a,b,c: panel
- 24: intermediate layer
- 25a,b: flow structure
- 26: LMF device
- 27: laser beam
- 28: powder material
- 29a,b: channel bordering surface

## Claims

1. A cooled wall structure for hot gas parts of a combustion chamber (11) of a gas turbine, the cooling wall structure comprising:
a sandwich panel (23, 23a-c) with:
a hot side (18) that is configured and arranged to be exposed hot gas of the gas turbine;
a distal opposite side, opposite from the hot side;
a base plate (19) that forms part of the hot side (18);
a covering layer that forms part of opposite side; and
a cooling channel (21), formed between the base plate (19) and the a covering layer (20) that extends parallel to the base plate (19), for
guiding a cooling fluid, especially cooling air,
**characterized in that** the cooling channel (21), comprises micro-structures (22a,b,c) therein that are configured to enhance heat transfer between a cooling fluid passing the through the cooling channel (21) wherein the micro-structures (22a,b,c) are made by an additive manufacturing process.

2. The cooled wall structure according to claim 1, wherein the micro-structures (22a,b,c) are made by a Micro Laser Metal Forming (µ-LMF) process.

3. The cooled wall structure according to claim 1 or 2, wherein the micro-structures (22a,b,c) in the cooling channel (21) are formed on the surfaces of the base plate (19) and/or the covering layer (20).

4. The cooled wall structure according to any one of the claims 1-3, wherein at least some of the micro-structures (22a,b,c) have a simple geometrical form.

5. The cooled wall structure according to claim 4, wherein at least some of the micro-structures (22a,b,c) are shaped in the form of one any of a selection of a vertically standing cylindrical pin, a vortex generating form and a pyramid shape.

6. The cooled wall structure according to any one of the claims 1-5, wherein the sandwich panel (23, 23a,b) consists of the base plate (19) and the covering layer (20), and that the cooling channel (21) is formed by a recess in the base plate (19).

7. The cooled wall structure according to any one of the claims 1-5, wherein the sandwich panel (23c) consists of the base plate (19), the covering layer (20) and at least one intermediate layer (24), arranged between the base plate (19) and the covering layer (20), having an opening, wherein the cooling channel (21) is formed by the opening the base plate (19) and the covering layer (20).

8. The cooled wall structure according to any one of the claims 1-7, wherein the base plate (19) and the covering layer (20) each have a channel bordering surface (29a,b) that defines a surface of the cooling channel (21), and that the micro-structures (22a,b,c) are located on at least one of the bordering surfaces (29a,b).

9. A method for manufacturing a cooled wall structure comprising the steps of:
a) providing a base plate (19) with a channel bordering surface (29a);
b) using an additive manufacturing process to form at least one micro-structure (22a,b,c) on the channel bordering surface (29a) wherein the at least one micro-structure (22a,b,c) is configured to enhance heat transfer between a cooling fluid flowing over the channel bordering surface (29a) and the channel bordering surface (29a); and
c) combining the base plate (19) with a covering layer (20), thereby creating a sandwich panel (23, 23a-c) that has an internal cooling channel (21) therebetween such that the channel bordering surface (29a) is contained within the cooling channel (21).

10. The method according to claim 9, wherein the base plate (19) has a recess, which forms the cooling channel (21), and the channel bordering surface (29a) is the bottom of the recess.

11. The method according to claim 10, wherein the covering layer (20) is directly bonded to the base plate (19).

12. The method according to claim 9, further including the steps of:
providing an intermediate layer (24) with an opening between the base plate (19) and the covering layer (20) such that the opening forms the cooling channel (21) between the base plate (19) and the covering layer (20), and the channel bordering surface (29a) is contained within the cooling channel (21); and combining, especially by bonding, the base plate (19), the intermediate layer (24) and the covering layer (20) to form the sandwich panel (23c).

13. A method for manufacturing a cooled wall structure comprising the steps of:
a) providing a base plate (19);
b) providing a covering layer (20) having a channel bordering surface (29b);
c) using an additive manufacturing process to form at least one micro-structure (22a,b,c) on the channel bordering surface (29a) wherein the at least one micro-structure (22a,b,c) is configured to enhance heat transfer between a cooling fluid flowing over the channel bordering surface (29a) and the channel bordering surface (29a); and
c) combining the base plate (19) with the covering layer (20), thereby creating a sandwich panel (23, 23a-c) with an internal cooling channel (21), which is partially bordered by the channel bordering surface (29b) of the covering layer (20).

14. The method according to claim 15 including the step of providing the base plate (19) with a recess that forms the cooling channel (21) such that the channel bordering surface (29b) is located in the cooling channel (21).

15. The method according to claim 14 including bonding the covering layer (20) directly to the base plate (19).

16. The method according to claim 13 including:
providing an intermediate layer (24) with an opening; and
combining, especially by bonding, the intermediate layer (24) between the base plate (19) and the covering layer (20) so as to form the cooling channel (21) that contains the channel bordering surface (29b).

17. The method according to one of the claims 9-16 wherein the step of additive manufacturing processing utilises the Micro Laser Metal Forming (µ-LMF) technique.
